# EUROPEAN PATENT SPECIFICATION

(11) **EP 3 115 288 B1**
(45) Date of publication and mention of the grant of the patent: **21.08.2019**
(21) Application number: 16169649.7
(22) Date of filing: 13.05.2016
(51) Int. Cl.: B62K 21/18, B62K 21/24, B62K 21/04, B62K 21/12

(54) **STRADDLED VEHICLE**
GRÄTSCHSITZFAHRZEUG
VÉHICULE À CALIFOURCHON

(30) Priority: 10.07.2015 JP 2015138344
(43) Date of publication of application: 11.01.2017
(73) Proprietor: Yamaha Hatsudoki Kabushiki Kaisha, Iwata-shi, Shizuoka 438-8501 (JP)
(72) Inventor: TANTITAWEEPORN, Taspon, 10540 Samutprakarn (TH); OHARA, Tohru, 10540 Samutprakarn (TH)
(74) Representative: Grünecker Patent- und Rechtsanwälte PartG mbB

(56) References cited:
- JP-A- H0 891 273
- JP-A- H0 899 677
- JP-A- S60 113 788
- JP-A- 2012 144 145
- US-A1- 2008 284 129
- US-A1- 2011 239 814
- US-B1- 6 237 710
- US-B1- 6 325 402

## Description

The present invention relates to a straddled vehicle according to the preamble of independent claim 1. Such a straddled vehicle can be taken from the prior art document JP 2012-144145 A.

In a type of straddled vehicle, a fuel tank is disposed between a steering device and a seat. In this type of straddled vehicle, the fuel tank or a component disposed between the steering device and the fuel tank (hereinafter referred to as "fuel tank or so forth") is laid out not to interfere with the steering device.

For example, a straddled vehicle described in Japanese Patent Application Publication No. JP2014-61742A includes an upper bracket (6) and an ignition switch (30). The upper bracket (6) connects a front fork (10) and a steering shaft (7), and the ignition switch (30) is disposed between the upper bracket (6) and a fuel tank (26). In the straddled vehicle described in Japanese Patent Application Publication No. JP2014-61742A, the upper bracket (6) is configured not to interfere with the fuel tank (26) and the ignition switch (30) when rotated together with a handle (14).

The straddled vehicles are demanded to include a fuel tank having as much capacity as possible. However, the straddled vehicles are produced in relatively small size and have only a limited space for disposing components. Hence, it is difficult to simply enlarge the entire size of the fuel tank. Therefore, to reliably produce the fuel tank in large capacity, it is considered to extend the fuel tank in various directions by devising the shape of the fuel tank.

However, upward extension of the fuel tank is restricted from the perspective of design or of keeping a riding position unchanged. On the other hand, when the fuel tank is extended rearward, the position of the seat is shifted rearward. Hence, rearward extension of the fuel tank is restricted from the perspective of keeping the riding position unchanged. Additionally, in the aforementioned type of straddled vehicle that the fuel tank is disposed between the steering device and the seat, a rider stabilizes his/her driving position by holding the fuel tank between the knees (hereinafter referred to "knee gripping"). When the fuel tank is extended in the vehicle width (transverse) direction, this negatively affects knee gripping, and further, negatively affects comfortableness in vehicle riding. Hence, vehicle width directional extension of the fuel tank is restricted.

In view of the above, to keep the riding position unchanged, and simultaneously, to enlarge the capacity of the fuel tank without degrading comfortableness in vehicle riding, the inventor of the present application devised a construction that the fuel tank is forwardly extended by disposing the front end of the fuel tank as far forward as possible.

However, it is concerned that the fuel tank or so forth interferes with the steering device as a result of forward extension of the fuel tank. It can be assumed to shift a head pipe forward in order to extend the fuel tank forward, and simultaneously, prevent interference between the steering device and the fuel tank or so forth. By shifting the head pipe forward, the steering device can be shifted forward, and accordingly, the fuel tank can be extended forward without interfering with the steering device. In this case, however, there is a drawback that the vehicle is enlarged in the back-and-forth direction. Otherwise, there is a drawback that a restrictive condition is set for either a caster angle or a trail.

It is an object of the present invention to provide a straddled vehicle that can keep a riding position unchanged, and simultaneously, increase the capacity of a fuel tank while degradation in comfortableness in vehicle riding, increase in size of a vehicle, and interference between a steering device and the fuel tank or so forth are inhibited. According to the present invention said object is solved by a straddled vehicle having the features of independent claim 1. Preferred embodiments are laid down in the dependent claims.

Accordingly, it is provided a straddled vehicle that includes a frame, a seat, a steering device and a fuel tank. The seat is supported by the frame. The steering device is disposed forward of the seat and is rotatably supported by the frame. The fuel tank is disposed behind the steering device and in front of the seat.

The frame includes a head pipe and a main frame. The head pipe is disposed in a center of the straddled vehicle in a vehicle width direction, and extends obliquely downward to front. The main frame backwardly and downwardly extends from the head pipe. The main frame supports the fuel tank, and is located lower than an upper end of the fuel tank in a vehicle side view.

The steering device includes a steering shaft, a coupling member and a steering bar. The steering shaft is inserted into the head pipe. The coupling member is coupled to an upper portion of the steering shaft. The steering bar is held by the coupling member. The coupling member includes an upper bracket, a holder member and a fastener member. The steering shaft is coupled to the upper bracket. The holder member is disposed over the upper bracket, and holds the steering bar at a higher position than the upper bracket. The fastener member fastens the holder member to the upper bracket.

The steering bar includes a held portion, an outer end in the vehicle width direction, and an extended portion. The held portion is held by the holder member. The extended portion outwardly extends from the held portion toward the outer end in the vehicle width direction. The upper bracket includes a steering shaft coupling portion and a holder coupling portion. The upper end of the steering shaft is coupled to the steering shaft coupling portion. The fastener member penetrates through the holder coupling portion up and down. The holder coupling portion is coupled to a lower portion of the holder member.

The steering shaft coupling portion is located lower than the holder coupling portion and the fastener member. An up-and-down directional dimension (L2) from a rear end of the holder coupling portion to the held portion is larger than an up-and-down directional dimension (L0) from the fastener member to the steering shaft coupling portion. An up-and-down directional dimension (L3) from the held portion to the outer end is smaller than an up-and-down directional dimension (L1) from the held portion to the steering shaft coupling portion.

In the straddled vehicle according to the present aspect, the steering shaft coupling portion is disposed lower than the holder coupling portion and the fastener member. Therefore, the upper end of the head pipe can be located in a low position. The head pipe extends obliquely downward to front, and hence, the upper end of the head pipe is located in a low position. Therefore, the upper end of the head pipe can be herein disposed forward than that located in a high position. Accordingly, a space between the fuel tank and the head pipe can be reliably produced forward in large size. Consequently, the front end of the fuel tank can be disposed as far forward as possible.

Now, it is concerned that when the front end of the fuel tank is located as far forward as possible, either the fuel tank or a member disposed in the periphery of the fuel tank (hereinafter referred to as "the fuel tank or so forth") interferes with the steering bar. However, the up-and-down directional dimension (L2) from the rear end of the holder coupling portion to the held portion is larger than the up-and-down directional dimension (L0) from the fastener member to the steering shaft coupling portion. In other words, the height of the steering bar held by the holder member is larger than the length between the fastener member and the steering shaft coupling portion set to be located lower than the fastener member. Hence, the held portion of the steering bar can be located in a high position. Accordingly, the steering bar becomes unlikely to interfere with the fuel tank or so forth.

The steering shaft coupling portion is located lower than the holder coupling portion and the fastener member. In other words, the steering shaft coupling portion is located in a low position relatively to the holder coupling portion. Therefore, the holder member can be inhibited from being excessively elongated in comparison with a construction that the position of the entire upper bracket is lowered while the height position of the steering shaft coupling portion and that of the holder coupling portion are set to be equal. Therefore, strength required for the holder member can be easily and reliably achieved, and the holder member can be produced in small size.

Moreover, the up-and-down directional dimension (L3) from the held portion of the steering bar to the outer end is smaller than the up-and-down directional dimension (L1) from the held portion to the steering shaft coupling portion. Therefore, even when the up-and-down directional dimension (L2) from the rear end of the holder coupling portion to the held portion becomes large, the outer end of the steering bar can be inhibited from being located in an excessively high position.

Furthermore, the main frame extends obliquely downward. Hence, when located forward, the fuel tank or so forth is likely to be located in a high position. In this case, it is concerned that in turning the steering bar, the extended portion of the steering bar interferes with the fuel tank or so forth. Additionally, the up-and-down directional dimension (L3) from the held portion of the steering bar to the outer end is smaller than the up-and-down directional dimension (L1) from the held portion to the steering shaft coupling portion. Thus, a larger space can be herein reliably produced between the upper bracket and the extended portion of the steering bar in comparison with a construction that the up-and-down directional dimension L3 is set to be greater than or equal to the up-and-down directional dimension L1 (i.e., L3≥L1) although sum of the up-and-down directional dimensions L1 and L3 (i.e., L1+L3) is set to be equal to that in this aspect of the present teaching. Therefore, in turning the steering bar, the extended portion becomes unlikely to interfere with the fuel tank or so forth. As a result, increase in size of the vehicle can be inhibited, and simultaneously, increase in capacity of the fuel tank can be achieved by forwardly extending the fuel tank without making the fuel tank interfere with the steering bar.

A front end of the steering shaft coupling portion may be located forward of the rear end of the holder coupling portion. In this case, the upper bracket can be compactly produced in the back-and-forth direction. Therefore, increase in size of the vehicle can be inhibited.

The straddled vehicle may further include a headlight. The headlight may include a lens portion, and may be disposed in front of the head pipe. A lower end of an upper end portion of the head pipe may be located lower than an upper end of the lens portion. In this case, the upper end of the head pipe can be located in a low position.

The upper end of the fuel tank may be located higher than the upper bracket. In this case, forward extension can be similarly applied to a fuel tank extended to the extent that its upper end can be located higher than the upper bracket in order to reliably have a large capacity. Additionally, the relation "L1>L3" remains to be established even when the fuel tank is forwardly extended. Hence, the steering bar is unlikely to interfere with the fuel tank or so forth.

An upper end of the holder member may be located higher than the upper end of the fuel tank. In this case, the up-and-down directional dimension L2 is reliably set to the extent that the upper end of the holder member can be located higher than the upper end of the fuel tank. Accordingly, the steering bar becomes further unlikely to interfere with the fuel tank or so forth.

The main frame may include right and left main frames produced as a right and left pair. The fuel tank may overlap with each of the right and left main frames in a vehicle plan view. In this case, the relation "L1>L3" remains to be established even in forwardly shifting the front end of the fuel tank enlarged right and left to overlap with the right and left main frames. Hence, interference between the steering bar and the fuel tank can be effectively inhibited.

The fuel tank may include a maximum width portion in a front portion thereof. The relation "L1>L3" herein remains to be established even in forwardly shifting the front end of the fuel tank including the front portion thus enlarged right and left. Hence, interference between the steering bar and the fuel tank can be effectively inhibited.

A back-and-forth directional dimension of the head pipe may be smaller than an up-and-down directional dimension of the head pipe. When the present teaching is applied to the head pipe thus constructed, the fuel tank can be designed to reliably have a large capacity by forwardly disposing the front end of the fuel tank, and simultaneously, the steering device and the fuel tank and its periphery can be compactly designed in the back-and-forth direction.

The straddled vehicle may further include a front wheel. The steering device may further include right and left tubular members. The right and left tubular members are members by which the front wheel is rotatably supported. The upper bracket may further include a left coupling portion and a right coupling portion. The left coupling portion is coupled to an upper portion of the left tubular member. The right coupling portion is coupled to an upper portion of the right tubular member. A bottom of the steering shaft coupling portion is located lower than a bottom of the left coupling portion and a bottom of the right coupling portion. In this case, the position of the upper end of the head pipe can be lowered by lowering the position of the steering shaft coupling portion.

The upper bracket may further include a middle bracket portion. The middle bracket portion is located between the right coupling portion and the left coupling portion in the vehicle width direction. The middle bracket portion may include the holder coupling portion. The holder member may include an upper holder portion and a lower holder portion. The upper holder portion is disposed over the steering bar. The lower holder portion is disposed under the steering bar. A dimension of the lower holder portion in an axial direction of the steering shaft may be larger than a dimension of the middle bracket portion in the axial direction of the steering shaft. In this case, the lower holder portion has a large dimension. Hence, the held portion of the steering bar can be attached to a high position. Additionally, the upper bracket can be herein produced in smaller size than an upper bracket that the middle bracket portion thereof is increased in dimension in order to attach the held portion of the steering bar to a high position.

A lower end of the holder member may be located higher than the left coupling portion. In this case, the position of the upper end of the head pipe can be lowered, while the position of the steering bar can be kept high.

The straddled vehicle may further include a member disposed between the fuel tank and the upper bracket in a vehicle back-and-forth direction. In this case, the member disposed between the fuel tank and the upper bracket can be disposed as far forward as possible by disposing the upper end of the head pipe in a low position. Accordingly, increase in capacity of the fuel tank can be achieved by forwardly extending the fuel tank.

### BRIEF DESCRIPTION OF THE DRAWINGS

FIG. 1 is a side view of a straddled vehicle.
FIG. 2 is a plan view of the straddled vehicle.
FIG. 3 is a front view of the straddled vehicle.
FIG. 4 is an enlarged side view of a front portion of the straddled vehicle.
FIG. 5 is an exploded view of a portion of a frame and a steering device.
FIG. 6 is an exploded view of the portion of the frame and the steering device.
FIG. 7 is an enlarged side view of the steering device, the frame and a fuel tank.
FIG. 8 is a top view of the steering device, the frame and the fuel tank.
FIG. 9 is a plan view of an upper bracket.
FIG. 10 is a side view of the upper bracket.
FIG. 11 is a rear view of the upper bracket.
FIG. 12 is a plan view of the upper bracket to which lower holder portions are attached.
FIG. 13 is a side view of the upper bracket to which the lower holder portions are attached.
FIG. 14 is a rear view of the upper bracket to which the lower holder portions are attached.
FIG. 15 is a cross-sectional side view of a holder member and the upper bracket.
FIG. 16 is an enlarged side view of a steering device, a frame and a fuel tank and shows a conceptual comparative example.

### DETAILED DESCRIPTION OF THE PREFERRED EMBODIMENTS

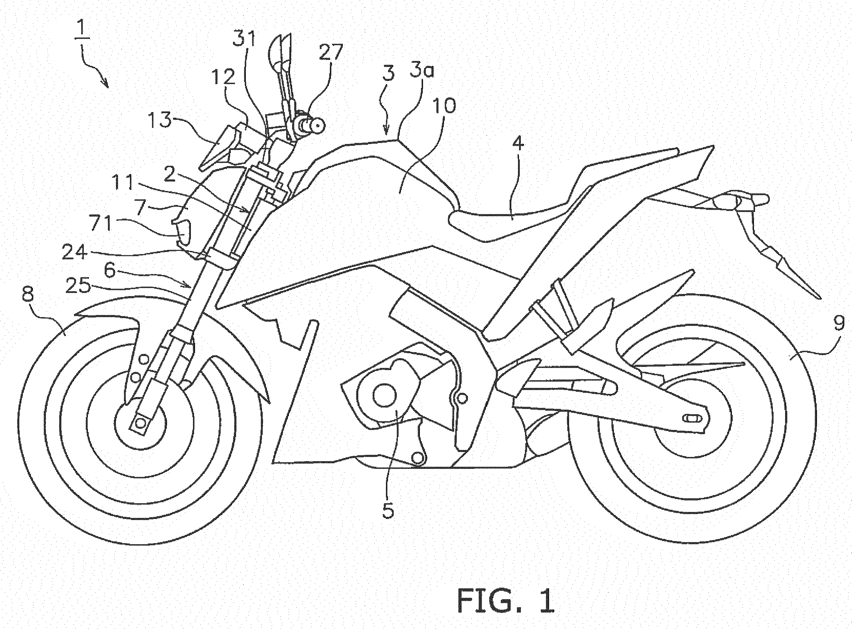

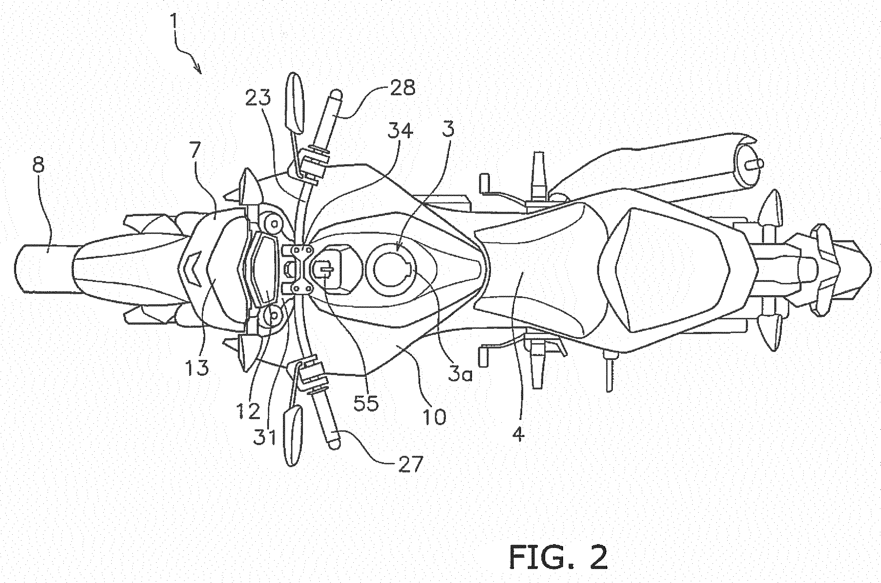

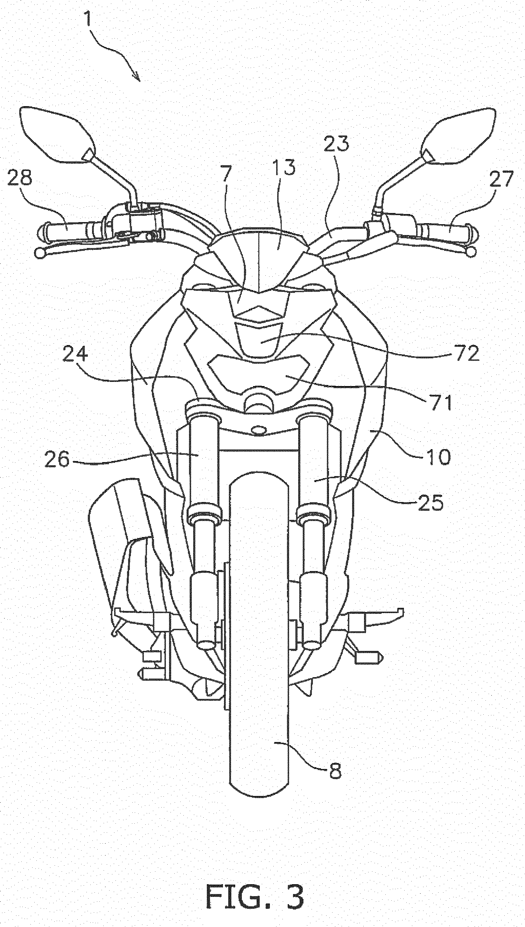

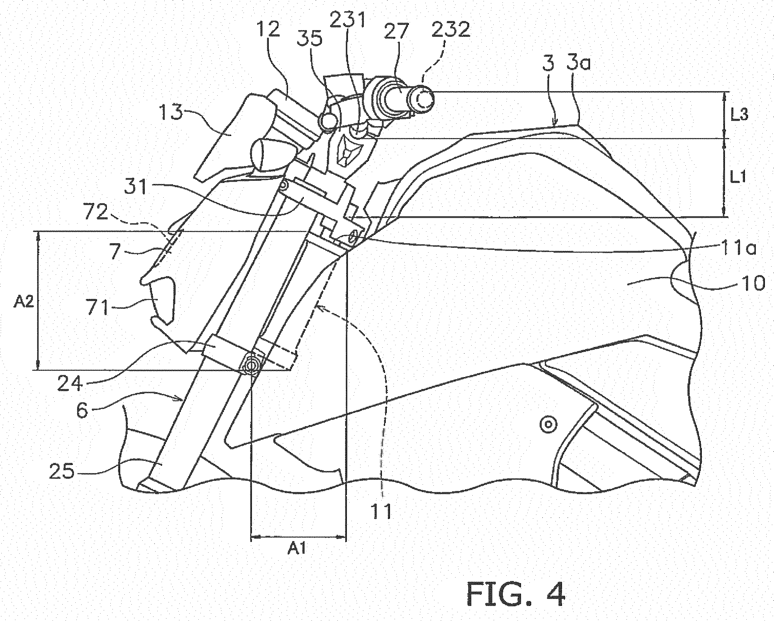

A straddled vehicle 1 according to a preferred embodiment will be hereinafter explained with reference to drawings. FIG. 1 is a side view of the straddled vehicle 1. FIG. 2 is a plan view of the straddled vehicle 1. FIG. 3 is a front view of the straddled vehicle 1. FIG. 4 is an enlarged side view of a front portion of the straddled vehicle 1. It should be noted that in the present specification, a back-and-forth direction, an up-and-down direction and a right-and-left direction of the straddled vehicle 1 are defined as meaning the back-and-forth direction, the up-and-down direction and the right-and-left direction seen from a rider riding on the straddled vehicle 1.

The straddled vehicle 1 includes a frame 2, a fuel tank 3, a seat 4, an engine 5, a steering device 6, a headlight 7, a front wheel 8, a rear wheel 9 and a vehicle body cover 10. The frame 2 includes a head pipe 11. The head pipe 11 is disposed in the center of the vehicle in the vehicle width (transverse) direction, and forwardly extends obliquely downward to front. As shown in FIG. 4, a back-and-forth directional dimension A1 of the head pipe 11 is smaller than an up-and-down directional dimension A2 of the head pipe 11 .

The fuel tank 3 is disposed behind the steering device 6 and in front of the seat 4. The fuel tank 3 is disposed behind the head pipe 11. The seat 4 is disposed behind the fuel tank 3. The seat 4 is supported by the frame 2.

The engine 5 is disposed under the fuel tank 3. The steering device 6 is disposed forward of the seat 4. The steering device 6 is disposed in front of the fuel tank 3. The steering device 6 is rotatably supported by the frame 2.

The headlight 7 is disposed in front of the head pipe 11. The headlight 7 is disposed in front of the steering device 6. As shown in FIG. 3, the headlight 7 includes lens portions 71 and 72. Each of the lens portions 71 and 72 is made of a material with translucency. The lens portions 71 and 72 include a first lens portion 71 and a second lens portion 72. The second lens portion 72 is disposed over the first lens portion 71. An upper end portion 11a of the head pipe 11 is located lower than an upper end of the second lens portion 72. It should be noted that in FIG. 3, the first lens portion 71 and the second lens portion 72 are separated from each other, but alternatively, may be connected to each other.

A meter unit 12 is disposed over the headlight 7. The meter unit 12 includes, for instance, a speedometer. A meter cover 13 is disposed in front of the meter unit 12. The meter cover 13 is disposed over the headlight 7.

The front wheel 8 is disposed in front of the engine 5. The front wheel 8 is rotatably supported by the steering device 6. The rear wheel 9 is disposed behind the engine 5. The rear wheel 9 is configured to be driven by the engine 5.

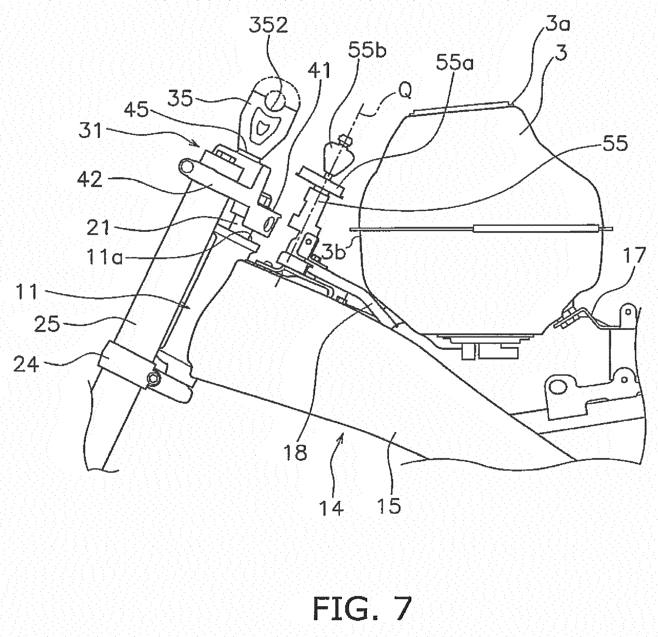

The vehicle body cover 10 covers the right and left sides of the frame 2. The vehicle body cover 10 covers a portion of the fuel tank 3. Specifically, the vehicle body cover 10 covers a portion of the fuel tank 3 from the right and left sides. Also, the vehicle body cover 10 covers a portion of the fuel tank 3 from above. As shown in FIG. 2, the vehicle body cover 10 exposes a fuel filler portion of the fuel tank 3 to the outside without covering it. An upper end 3a of the fuel tank 3 is located on the fuel filler portion (see FIG. 7).

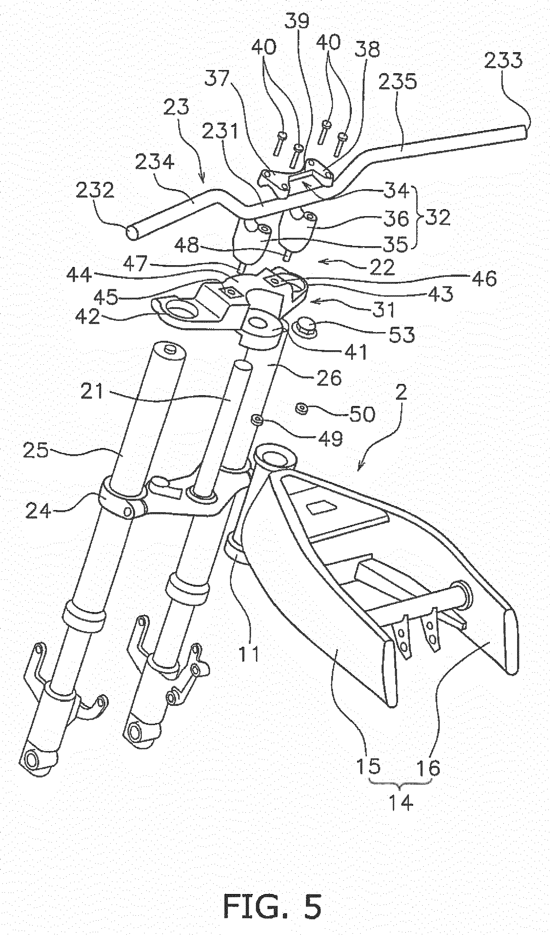

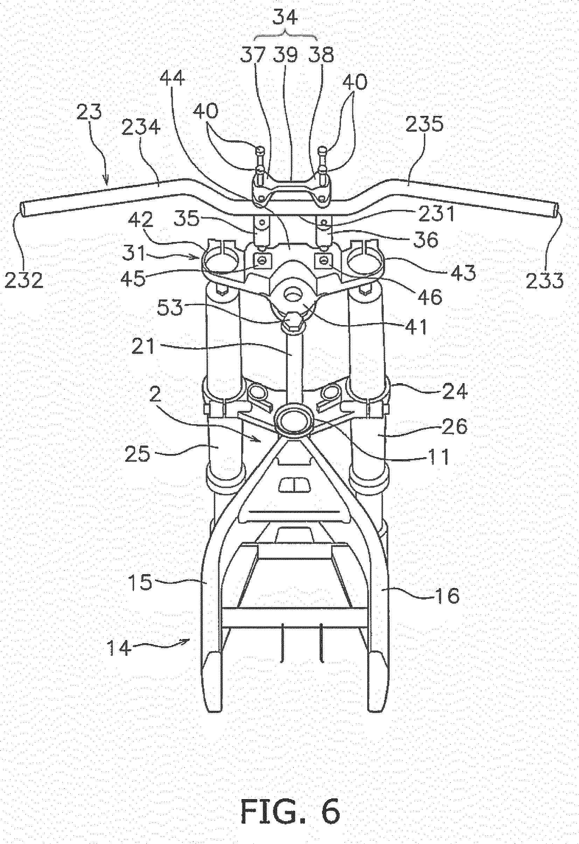

FIGS. 5 and 6 are exploded views of a portion of the frame 2 and the steering device 6. FIG. 7 is an enlarged side view of the steering device 6, the frame 2 and the fuel tank 3. As shown in FIGS. 5 to 7, the frame 2 includes a main frame 14. The main frame 14 supports the fuel tank 3. As shown in FIG. 7, the fuel tank 3 is attached to the main frame 14 through brackets 17 and 18. In a vehicle side view, the main frame 14 is located lower than the upper end 3a of the fuel tank 3.

The main frame 14 includes left and right main frames 15 and 16 produced as a right and left pair. The front end of the left main frame 15 is joined to the head pipe 11. In the vehicle side view, the left main frame 15 backwardly and downwardly extends from the head pipe 11. The front end of the right main frame 16 is joined to the head pipe 11. In the vehicle side view, the right main frame 16 backwardly and downwardly extends from the head pipe 11.

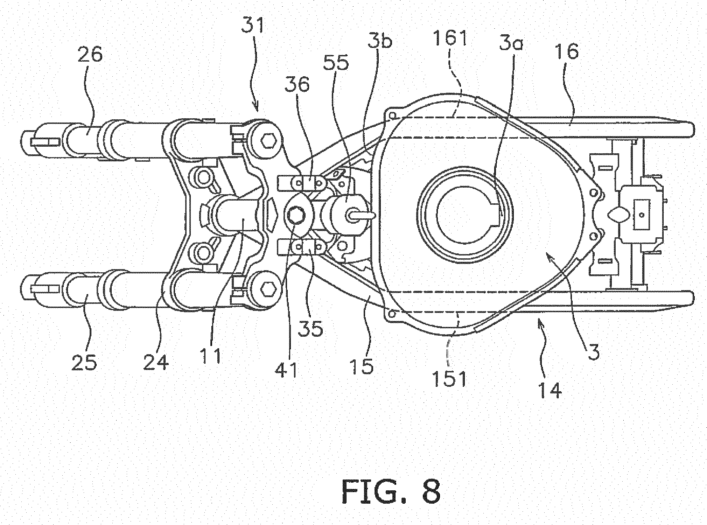

FIG. 8 is a top view of the steering device 6, the frame 2 and the fuel tank 3. As shown in a vehicle plan view of FIG. 8, the fuel tank 3 overlaps with each of the left main frame 15 and the right main frame 16. The fuel tank 3 includes a maximum width portion in the front portion thereof. In other words, the maximum width portion of the fuel tank 3 is located forward of the back-and-forth directional middle of the fuel tank 3. In the vehicle plan view, the main frame 14 includes portions 151 and 161 overlapping with the fuel tank 3.

As shown in FIG. 5, the steering device 6 includes a steering shaft 21, a coupling member 22, a steering bar 23, a lower bracket 24, a left tubular member 25 and a right tubular member 26. The steering shaft 21 is inserted into the head pipe 11. The steering shaft 21 extends obliquely downward to front. The coupling member 22 is joined to the upper portion of the steering shaft 21. The coupling member 22 will be explained below in detail.

The steering bar 23 is held by the coupling member 22. The steering bar 23 is a bent pipe-shaped member. The steering bar 23 includes a held portion 231, left and right outer ends 232 and 233, and left and right extended portions 234 and 235. The held portion 231 is held by the coupling member 22. The held portion 231 extends in the vehicle width direction. The left outer end 232 is the left end of the steering bar 23 in the vehicle width direction. The right outer end 233 is the right end of the steering bar 23 in the vehicle width direction. As shown in FIGS. 2 and 3, a left grip 27 is attached to the left outer end 232. A right grip 28 is attached to the right outer end 233.

The extended portions 234 and 235 respectively extend vehicle width directionally outward from the held portion 231 to the left and right outer ends 232 and 233. It should be noted that the term "vehicle width directionally outward" means directions away from a vehicle center line that passes through the center of the vehicle in the vehicle width direction and extends in the back-and-forth direction. The extended portions 234 and 235 include a left extended portion 234 and a right extended portion 235. The left extended portion 234 extends from the held portion 231 obliquely upward to the left and bends toward the left outer end 232. The right extended portion 235 extends from the held portion 231 obliquely upward to the right and bends toward the right outer end 233.

The left tubular member 25 and the right tubular member 26 support the front wheel 8 such that the front wheel 8 is rotatable. The front wheel 8 is attached to the lower portion of the left tubular member 25 and that of the right tubular member 26. The left and right tubular members 25 and 26 are, for instance, suspensions. The upper portions of the left and right tubular members 25 and 26 are attached to the coupling member 22. The up-and-down directionally intermediate portions of the left and right tubular members 25 and 26 are attached to the lower bracket 24.

Next, the construction of the coupling member 22 will be explained in detail. As shown in FIG. 5, the coupling member 22 includes an upper bracket 31, a holder member 32 and fastener members 47 and 48. The steering shaft 21 is coupled to the upper bracket 31. The holder member 32 is disposed over the upper bracket 31. The holder member 32 holds the steering bar 23 such that the steering bar 23 is located higher than the upper bracket 31. The fastener members 47 and 48 fasten the holder member 32 to the upper bracket 31.

The holder member 32 includes an upper holder portion 34, a left lower holder portion 35 and a right lower holder portion 36. The upper holder portion 34 is disposed over the steering bar 23. The upper holder portion 34 includes a left upper holder portion 37, a right upper holder portion 38 and an upper holder connecting portion 39. The right and left upper holder portions 38 and 37 are disposed apart from each other right and left. The upper holder connecting portion 39 connects the left and right upper holder portions 37 and 38 to each other. It should be noted that the upper holder connecting portion 39 may not be provided. In other words, the left and right upper holder portions 37 and 38 may be discrete members provided separately from each other.

The left and right lower holder portions 35 and 36 are disposed under the steering bar 23. The left and right lower holder portions 35 and 36 are disposed right-and-left directionally away from each other. The left lower holder portion 35 is disposed under the left upper holder portion 37. The left lower holder portion 35 is fixed to the left upper holder portion 37 by fixation members 40. The right lower holder portion 36 is disposed under the right upper holder portion 38. The right lower holder portion 36 is fixed to the right upper holder portion 38 by the other fixation members 40. The fixation members 40 are, for instance, bolts. The held portion 231 of the steering bar 23 is fixed while being interposed between the left lower holder portion 35 and the left upper holder portion 37. Also, the held portion 231 of the steering bar 23 is fixed while being interposed between the right lower holder portion 36 and the right upper holder portion 38.

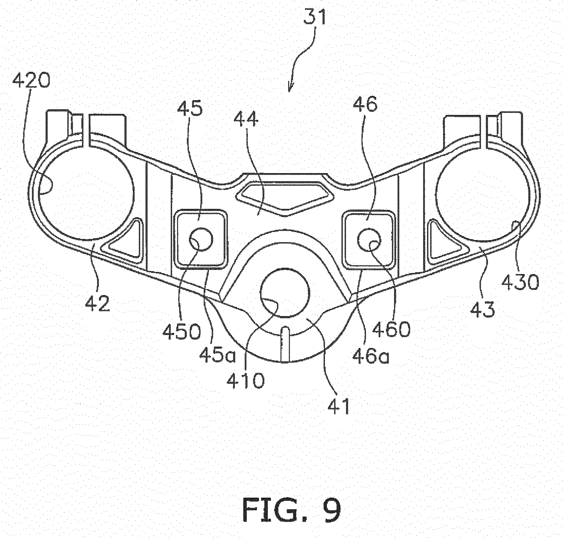

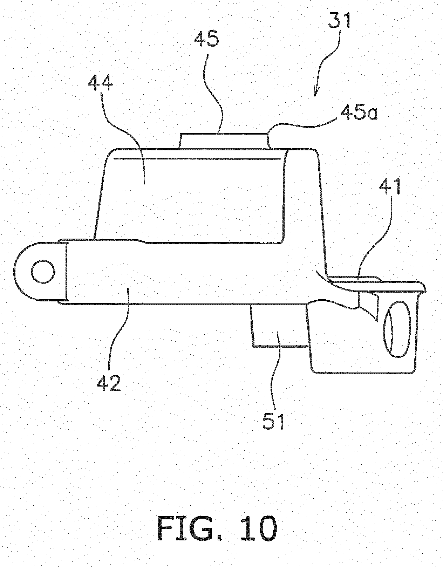

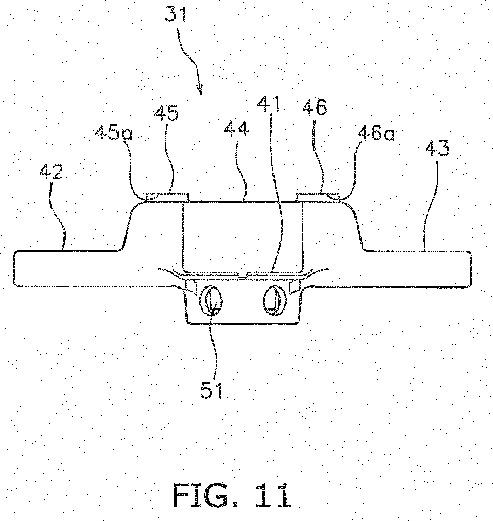

FIG. 9 is a plan view of the upper bracket 31. FIG. 10 is a side view of the upper bracket 31. FIG. 11 is a rear view of the upper bracket 31. As shown in FIGS. 9 to 11, the upper bracket 31 includes a steering shaft coupling portion 41, a left coupling portion 42, a right coupling portion 43 and a middle bracket portion 44. The upper bracket 31 is made of casting, and the steering shaft coupling portion 41, the left coupling portion 42, the right coupling portion 43 and the middle bracket portion 44 are integrally formed.

The upper portion of the steering shaft 21 is coupled to the steering shaft coupling portion 41. The steering shaft coupling portion 41 includes a hole 410. The upper portion of the steering shaft 21 is inserted into the hole 410.

The left coupling portion 42 is coupled to the upper portion of the left tubular member 25. The left coupling portion 42 includes a left hole 420. The upper portion of the left tubular member 25 is inserted into the left hole 420. The right coupling portion 43 is coupled to the upper portion of the right tubular member 26. The right coupling portion 43 includes a right hole 430. The upper portion of the right tubular member 26 is inserted into the right hole 430.

The middle bracket portion 44 is located between the left and right coupling portions 42 and 43 in the vehicle width direction. The middle bracket portion 44 is located in front of the steering shaft coupling portion 41. The middle bracket portion 44 includes a left holder coupling portion 45 and a right holder coupling portion 46. The right and left holder coupling portions 46 and 45 are disposed apart from each other right and left. The front end of the steering shaft coupling portion 41 is located forward of the rear end 45a of the left holder coupling portion 45 and the rear end 46a of the right holder coupling portion 46. The front end of the steering shaft coupling portion 41 is disposed rearward of the front end of the left holder coupling portion 45 and that of the right holder coupling portion 46. The left holder coupling portion 45 includes a hole 450. The right holder coupling portion 46 includes a hole 460.

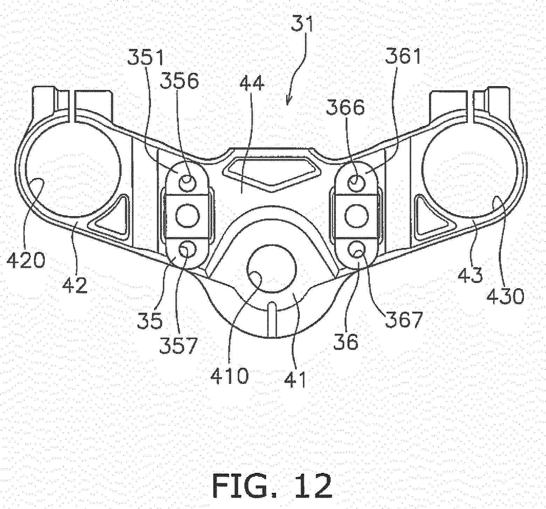

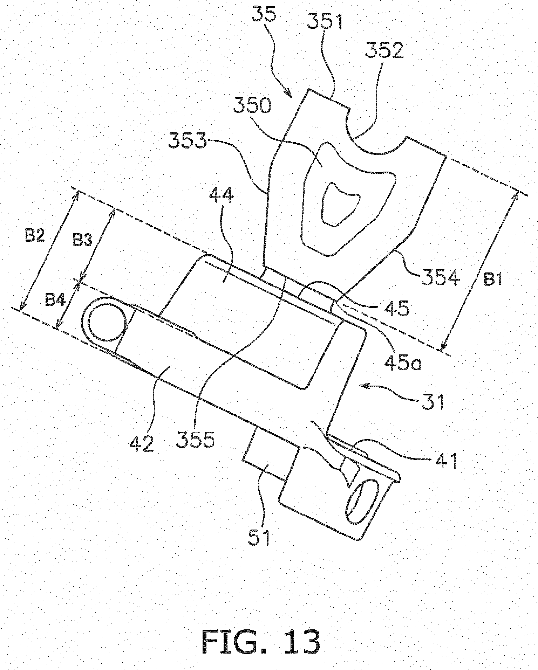

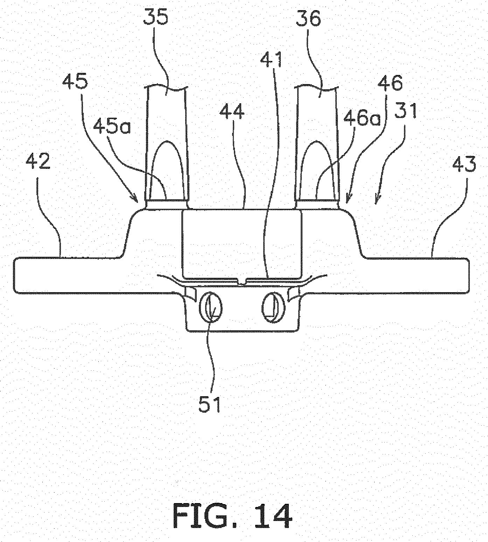

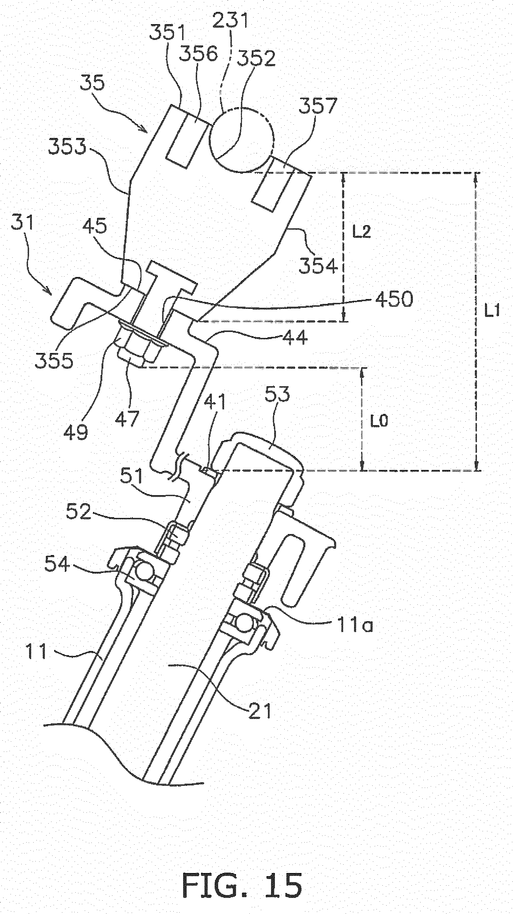

FIG. 12 is a plan view of the upper bracket 31 to which the left and right lower holder portions 35 and 36 are attached. FIG. 13 is a side view of the upper bracket 31 to which the left and right lower holder portions 35 and 36 are attached. FIG. 14 is a rear view of the upper bracket 31 to which the left and right lower holder portions 35 and 36 are attached. FIG. 15 is a cross-sectional side view of the holder member 32 and the upper bracket 31.

As shown in FIGS. 12 to 15, the left holder coupling portion 45 is coupled to the lower portion of the left lower holder portion 35. As shown in FIG. 15, the fastener member 47 is inserted into the hole 450 of the left holder coupling portion 45. The fastener member 47 protrudes from the bottom surface of the left lower holder portion 35. A nut 49 is screwed onto the fastener member 47. Accordingly, the left holder coupling portion 45 is fixed to the left lower holder portion 35 by the fastener member 47.

Likewise, the fastener member 48 shown in FIG. 5 is inserted into the hole 460 of the right holder coupling portion 46. The fastener member 48 protrudes from the bottom surface of the right lower holder portion 36. A nut 50 shown in FIG. 5 is screwed onto the fastener member 48. Accordingly, the right holder coupling portion 46 is fixed to the right lower holder portion 36 by the fastener member 48.

As shown in FIG. 13, the left lower holder portion 35 includes a convexo-concave region 350 on a lateral surface thereof. The left lower holder portion 35 includes a recess 352 on an upper surface 351 thereof. The recess 352 is downwardly recessed in the shape of a circular arc. The held portion 231 of the steering bar 23 is partially disposed in the recess 352. Front and rear surfaces 353 and 354 form a downwardly tapered shape of the left lower holder portion 35. A bottom surface 355 of the left lower holder portion 35 has a flat shape, and is attached to the left holder coupling portion 45.

As shown in FIG. 12, the upper surface 351 of the left lower holder portion 35 includes screw holes 356 and 357 into which the aforementioned fixation members 40 are screwed. Likewise, an upper surface 361 of the right lower holder portion 36 includes screw holes 366 and 367 into which the aforementioned fixation members 40 are screwed.

As shown in FIG. 15, the steering shaft coupling portion 41 is located lower than the left holder coupling portion 45 and the fastener member 47. An up-and-down directional dimension L2 from the rear end 45a of the left holder coupling portion 45 to the held portion 231 (hereinafter referred to as "height of the steering bar 23 held by the holder member 32") is larger than an up-and-down directional dimension L0 from the fastener member 47 to the steering shaft coupling portion 41.

As shown in FIG. 15, the steering shaft coupling portion 41 includes a protruding portion 51 protruding downward. A nut 52 is disposed under the protruding portion 51, while being attached onto the steering shaft 21. The protruding portion 51 is contacted to the nut 52. The steering shaft coupling portion 41 is fixed to the steering shaft 21, while being interposed between the nut 52 and a nut cap 53. A bearing 54 is disposed under the nut 52, and the steering shaft 21 is supported by the head pipe 11 through the bearing 54.

As shown in FIG. 13, a dimension B1 of the left lower holder portion 35 in the axial direction of the steering shaft 21 is larger than a dimension B2 of the middle bracket portion 44 in the axial direction of the steering shaft 21. The left holder coupling portion 45 is located higher than the left coupling portion 42. Therefore, the lower end of the left holder member 35 is located higher than the left coupling portion 42.

A distance B3 between the left holder coupling portion 45 and the left coupling portion 42 in the axial direction of the steering shaft 21 is larger than a dimension B4 of the left coupling portion 42 in the axial direction of the steering shaft 21. The bottom of the steering shaft coupling portion 41 is located lower than the bottom of the left coupling portion 42 and the bottom of the right coupling portion 43. In other words, the bottom of the protruding portion 51 is located lower than the bottom of the left coupling portion 42 and the bottom of the right coupling portion 43.

As shown in FIG. 4, the left outer end 232 of the steering bar 23 is located higher than the fuel tank 3. An up-and-down directional dimension L3 from the held portion 231 to the left outer end 232 (hereinafter referred to as "height of the steering bar 23") is smaller than an up-and-down directional dimension L1 from the held portion 231 to the steering shaft coupling portion 41 (hereinafter referred to as "height of the steering bar 23 held by the coupling member 22). It should be noted that the position of the held portion 231 to be herein mentioned means the position of the lower end of the held portion 231. In short, the position of the held portion 231 is defined as meaning the position of the lower end of the recess 352 of the aforementioned left lower holder portion 35.

As shown in FIG. 7, the upper end 3a of the fuel tank 3 is located higher than the upper bracket 31. The upper end of the left lower holder portion 35 is located higher than the upper end 3a of the fuel tank 3. The upper end 3a of the fuel tank 3 is located higher than the lower end of the recess 352 of the left lower holder portion 35. Therefore, the upper end 3a of the fuel tank 3 is located higher than the lower end of the held portion 231.

As shown in FIG. 7, a main switch 55 is disposed between the fuel tank 3 and the upper bracket 31 in the vehicle back-and-forth direction. The main switch 55 is configured to be operated in starting the engine 5. The upper end of the main switch 55 is located lower than that of the left lower holder portion 35. The upper end of the main switch 55 is located lower than that of the middle bracket portion 44. The upper end of the main switch 55 is located higher than that of the steering shaft coupling portion 41. The lower end of the main switch 55 is located lower than that of the steering shaft coupling portion 41. The lower end of the main switch 55 is located lower than an upper end portion (upper end surface) 11a of the head pipe 11. A center axis Q of the main switch 55 obliquely extends from front to rear and from down to up. The main switch 55 includes a cylinder 55a fixed to the frame 2 and a key 55b.

The right lower holder portion 36, the right holder coupling portion 46 and the right coupling portion 43 are respectively disposed bilaterally symmetric to the left lower holder portion 35, the left holder coupling portion 45 and the left coupling portion 42. Therefore, the shapes of the right lower holder portion 36, the right holder coupling portion 46 and the right coupling portion 43 and the positional relations of these portions 36, 46 and 43 with respect to the other members are similar to the shapes of the left lower holder portion 35, the left holder coupling portion 45 and the left coupling portion 42 and the positional relations of these portions 35, 45 and 42 with respect to the other members.

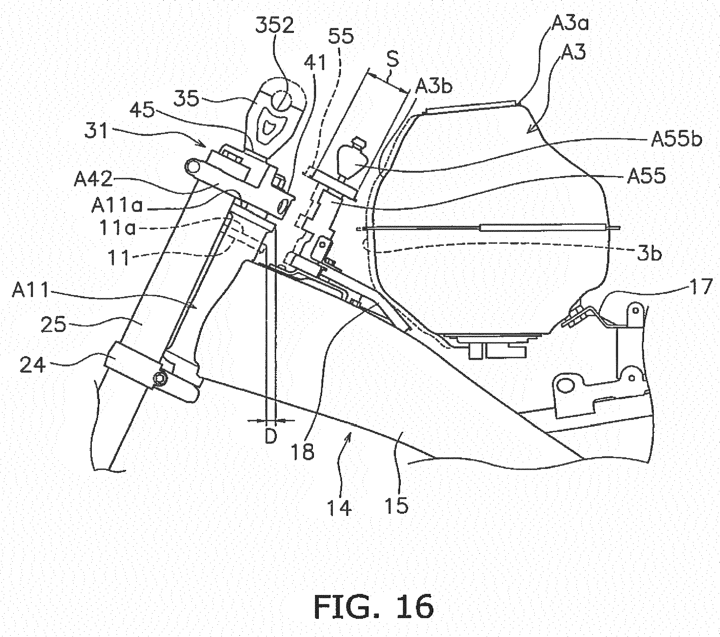

FIG. 16 is an enlarged side view of a steering device, a frame, and a fuel tank and shows a conceptual comparative example. As shown in FIG. 16, when the construction shown in FIG. 7 is changed by setting an upper end portion A11a of a head pipe A11 such that an upper bracket A42 is located at roughly equal height to the fastener members, the position of the upper end portion A11a is backwardly shifted by a distance D. In accordance with this, it is required to set a clearance from a main switch A55 to the head pipe A11 and that from the main switch A55 to the upper bracket A42. Therefore, the main switch A55 is required to be disposed rearward of the aforementioned main switch 55. As a result, a front end A3b of a fuel tank A3 is also required to be located rearward of a front end 3b of the aforementioned fuel tank 3. In this case, the capacity of the fuel tank A3 becomes smaller than that of the fuel tank 3. Especially, when the center axis Q of the main switch A55 is set to be directed from front to rear and from down to up, it is also required to reliably produce a large clearance between the fuel tank A3 and an operating space S for an obliquely extending key A55b. Hence, the fuel tank A3 is likely to be designed to have a smaller capacity.

The straddled vehicle 1 according to the present preferred embodiment explained above has the following features.

In general, straddled vehicles are produced in small size and have only a limited space for disposing components. Therefore, increase in size of a fuel tank is variously restricted to reliably produce the fuel tank in large capacity. For example, upward extension of the fuel tank 3 is restricted from the perspective of design or keeping a riding position unchanged. When the fuel tank 3 is extended rearward, the position of the seat 4 is shifted rearward. Hence, rearward extension of the fuel tank 3 is restricted from the perspective of keeping a riding position unchanged. When the fuel tank 3 is extended in the vehicle width direction, this negatively affects knee gripping, and further, negatively affects comfortableness in vehicle riding. Hence, vehicle width directional extension of the fuel tank 3 is restricted. Downward extension of the fuel tank 3 is also restricted from the perspective of keeping the fuel tank 3 and the engine 5 apart from each other. Additionally, forward extension of the fuel tank 3 is restricted from the perspective of interference between the steering bar 23 and the fuel tank 3 or so forth.

Compared to the above, in the straddled vehicle 1 according to the present preferred embodiment, with the left and right lower holder portions 35 and 36 and the upper bracket 31, the position of the held portion 231 of the steering bar 23 can be kept high, while the position of the upper end portion 11a of the head pipe 11 can be lowered. The head pipe 11 extends obliquely downward to front, and hence, the upper end portion 11a of the head pipe 11 is located in a low position. Therefore, the upper end portion 11a of the head pipe 11 can be herein disposed forward than that located in a high position. Accordingly, a space between the fuel tank 3 and the head pipe 11 can be reliably produced forward in large size. Consequently, the front end 3b of the fuel tank 3 can be disposed as far forward as possible, and a large tank capacity can be reliably produced. On the other hand, the held portion 231 of the steering bar 23 can be located in a high position. Hence, the steering bar 23 becomes unlikely to interfere with the fuel tank 3 or so forth.

The steering shaft coupling portion 41 is located lower than the left and right holder coupling portions 45 and 46 and the left and right fastener members 47 and 48. In other words, the position of the steering shaft coupling portion 41 is low relatively to the positions of the left and right holder coupling portions 45 and 46, and a long distance is produced up-and-down directionally between the steering shaft coupling portion 41 and the rear ends 45a and 46a of the left and right holder coupling portions 45 and 46. Accordingly, the left and right lower holder portions 35 and 36 can be herein inhibited from being excessively elongated in comparison with a construction that only the left and right lower holder portions 35 and 36 are elongated up and down. Therefore, strength required for the left and right lower holder portions 35 and 36 can be easily and reliably achieved, and the holder member 32 can be produced in small size.

Additionally, the height L3 of the steering bar 23 is smaller than the height L1 of the steering bar 23 held by the coupling member 22. Therefore, even when the height L2 of the steering bar 23 held by the holder member 32 becomes large, the outer ends 232 and 233 of the steering bar 23 can be inhibited from being located in excessively high positions. Alternatively, the height L3 of the steering bar 23 can be inhibited small, while the positions of the outer ends 232 and 233 of the steering bar 23 can be kept high with the setting of the height L2 of the steering bar 23 held by the holder member 32. Accordingly, degradation in operability can be herein inhibited in comparison with a construction that the height L3 of the steering bar 23 is set to be excessively large in order to keep the outer ends 232 and 233 of the steering bar 23 in high positions.

Moreover, the height L3 of the steering bar 23 is smaller than the height L1 of the steering bar 23 held by the coupling member 22. A larger space can be herein reliably produced between the upper bracket 31 and the extended portions 234 and 235 of the steering bar 23 in comparison with a construction that the height L3 of the steering bar 23 is set to be greater than or equal to the height L1 of the steering bar 23 held by the coupling member 22 although sum of the height L1 and the height L3 of the steering bar 23 (i.e., height from the steering shaft coupling portion 41 to the outer ends 232 and 233 of the steering bar 23) is set to be equal to the construction in the aforementioned preferred embodiment. Therefore, in turning the steering bar 23, the extended portions 234 and 235 become unlikely to interfere with the fuel tank 3 or so forth. As a result, increase in size of the vehicle can be inhibited, and simultaneously, increase in capacity of the fuel tank 3 can be achieved by forwardly extending the fuel tank 3 without making the fuel tank 3 interfere with the steering bar 23.

The straddled vehicle 1 may be any suitable type of vehicles other than the motorcycle. The number of the front wheels 8 is not limited to one, and alternatively, may be two or greater. The number of the rear wheels 9 is not limited to one, and alternatively, may be two or greater.

The shape of the upper bracket 31 may be changed from that described in the aforementioned preferred embodiment. The upper bracket 31 may be formed by any suitable manufacturing method other than casting. The shape of the holder member 32 may be changed from that described in the aforementioned preferred embodiment. The positional relations among the fuel tank 3, the upper bracket 31, the holder member 32, the frame 2 and so forth may be changed from those described in the aforementioned preferred embodiment.

The member to be disposed between the fuel tank 3 and the upper bracket 31 in the vehicle back-and-forth direction is not limited to the main switch 55, and alternatively, may be any suitable member. Yet alternatively, any member may not be disposed between the fuel tank 3 and the upper bracket 31. In this case, with the elimination of the member, the front end 3b of the fuel tank 3 can be disposed further forward.

Additionally, the main switch 55 is designed to include the cylinder 55a and the key 55b in the aforementioned preferred embodiment Alternatively, the cylinder 55a may be configured to be unlocked when a rider bringing an electronic key with him/her rides on the vehicle, and a member formed in the shape of a knob may be used instead of the key 55b.

## Claims

1. A straddled vehicle (1), comprising:
a frame (2);
a seat (4) supported by the frame (2);
a front wheel (8);
a steering device (6) disposed forward of the seat (4), the steering device (6) being rotatably supported by the frame (2); and
a fuel tank (3) disposed behind the steering device (6) and in front of the seat (4), wherein the frame (2) includes
a head pipe (11) disposed in a center of the straddled vehicle (1) in a vehicle width direction, the head pipe (11) extending obliquely downward to front, and
a main frame (15) backwardly and downwardly extending from the head pipe (11), the main frame (15) supporting the fuel tank (3), the main frame (15) being located lower than an upper end (3a) of the fuel tank (3) in a vehicle side view,
the steering device (6) includes
a steering shaft (21) inserted into the head pipe (11),
a coupling member (22) coupled to an upper portion of the steering shaft (21), and
a steering bar (23) held by the coupling member (22),
right and left tubular members (25, 26) by which the front wheel (8) is rotatably supported,
the coupling member (22) includes
an upper bracket (31) to which the steering shaft (21) is coupled,
a holder member (32) disposed over the upper bracket (31), the holder member (32) holding the steering bar (23) at a higher position than the upper bracket (31), and
a fastener member (47, 48) fastening the holder member (32) to the upper bracket (31),
the upper bracket (31) further includes
a left coupling portion (42) to be coupled to an upper portion of the left tubular member (25), and
a right coupling portion (43) to be coupled to an upper portion of the right tubular member (26),
the steering bar (23) includes
a held portion (231) held by the holder member (32),
an outer end (232,233) in the vehicle width direction, and
an extended portion (234,235) outwardly extending from the held portion (231) toward the outer end (232,233) in the vehicle width direction,
the upper bracket (31) includes
a steering shaft coupling portion (41) to which the upper end of the steering shaft (21) is coupled, and
a holder coupling portion (45, 46) through which the fastener member (47, 48) penetrates up and down, the holder coupling portion (45, 46) being coupled to a lower portion of the holder member (32),
an up-and-down directional dimension (L2) from a rear end (45a, 46a) of the holder coupling portion (45, 46) to a lowest part of the held portion (231) is larger than an up-and-down directional dimension (L0) from a lowest part of the fastener member (47, 48) to a highest part of the steering shaft coupling portion (41), **characterized in that**
the steering shaft coupling portion (41) is located lower than the holder coupling portion (45, 46) and the fastener member (47, 48),
an up-and-down directional dimension (L3) from the lowest part of the held portion (231) to a highest part of the outer end (232,233) of the steering bar (23) is smaller than an up-and-down directional dimension (L1) from the lowest part of the held portion (231) to the highest part of the steering shaft coupling portion (41), and
a bottom of the steering shaft coupling portion (41) is located lower than a bottom of the left coupling portion (42) and a bottom of the right coupling portion (43).

2. A straddled vehicle (1) according to claim 1, **characterized in that** a front end of the steering shaft coupling portion (41) is located forward of the rear end (45a, 46a) of the holder coupling portion (45, 46).

3. A straddled vehicle (1) according to claim 1 or 2, **characterized by:**
a headlight (7) including a lens portion (71, 72), the headlight (7) being disposed in front of the head pipe (11), wherein
a lower end of an upper end portion (11a) of the head pipe (11) is located lower than an upper end of the lens portion (71, 72).

4. A straddled vehicle (1) according to any of claims 1 to 3, **characterized in that** the upper end (3a) of the fuel tank (3) is located higher than the upper bracket (31).

5. A straddled vehicle (1) according to any of claims 1 to 4, **characterized in that** an upper end of the holder member (32) is located higher than the upper end (3a) of the fuel tank (3).

6. A straddled vehicle (1) according to any of claims 1 to 5, **characterized in that** the main frame (15) includes right and left main frames (15, 16) produced as a right and left pair,
and
the fuel tank (3) overlaps with each of the right and left main frames (15, 16) in a vehicle plan view.

7. A straddled vehicle (1) according to any of claims 1 to 6, **characterized in that** the fuel tank (3) includes a maximum width portion in a front portion thereof.

8. A straddled vehicle (1) according to any of claims 1 to 7, **characterized in that** a back-and-forth directional dimension (A1) of the head pipe (11) is smaller than an up-and-down directional dimension (A2 of the head pipe (11).

9. A straddled vehicle (1) according to any of claims 1 to 8, **characterized in that** the upper bracket (31) further includes a middle bracket portion (44) located between the right coupling portion (43) and the left coupling portion (42) in the vehicle width direction,
the holder coupling portion (45, 46) is provided on the middle bracket portion (44),
the holder member (32) includes
an upper holder portion (34) disposed over the steering bar (23), and
a lower holder portion (35) disposed under the steering bar (23), and
a dimension (B1) of the lower holder portion (35) in an axial direction of the steering shaft (21) is larger than a dimension (B2) of the middle bracket portion (44) in the axial direction of the steering shaft (21).

10. A straddled vehicle (1) according to any of claims 1 to 9, **characterized in that** a lower end of the holder member (32) is located higher than the left coupling portion (42).

11. A straddled vehicle (1) according to any of claims 1 to 10, **characterized by:**
a member disposed between the fuel tank (3) and the upper bracket (31) in a vehicle back-and-forth direction.

12. A straddled vehicle (1) according to claim 11, **characterized in that** the member disposed between the fuel tank (3) and the upper bracket (31) is a main switch (55), and
the main switch (55) has a center axis (Q) obliquely extending from front to rear and from down to up.

## Patentansprüche

1. Ein Spreiz-Sitz-Fahrzeug (1), das umfasst:
einen Rahmen (2);
einen Sitz (4), der durch den Rahmen (2) gelagert ist;
ein Vorder-Rad (8);
eine Lenk-Vorrichtung (6), die vor dem Sitz (4) positioniert ist, die Lenk-Vorrichtung (6) ist drehbar durch den Rahmen (2) gelagert; und
einen Kraftstoff-Tank (3), der hinter der Lenk-Vorrichtung (6) und vor dem Sitz (4) positioniert ist, wobei der Rahmen (2) beinhaltet
ein Kopf-Rohr (11), das in einer Mitte des Spreiz-Sitz-Fahrzeugs in einer Fahrzeug-Breiten-Richtung positioniert ist, das Kopf-Rohr (11) erstreckt sich schräg nach unten nach vorne, und
einen Haupt-Rahmen (15), der sich nach hinten und nach unten von dem Kopf-Rohr (11) erstreckt, der Haupt-Rahmen (15) lagert den Kraftstoff-Tank (3), der Haupt-Rahmen (15) ist niedriger angeordnet als ein oberes Ende (3a) des Kraftstoff-Tanks (3) in einer Fahrzeug-Seiten-Ansicht,
die Lenk-Vorrichtung (6) beinhaltet
eine Lenk-Welle (21), die in das Kopf-Rohr (11) eingesetzt ist,
ein Kopplungs-Element (22), das mit einem oberen Abschnitt der Lenk-Welle (21) gekoppelt ist, und
eine Lenk-Stange (23), die durch das Kopplungs-Element (22) gehalten ist,
rechte und linke Rohr-Elemente (25, 26), durch die das Vorder-Rad (8) drehbar gelagert ist,
das Kopplungs-Element (22) beinhaltet
eine obere Klammer (31), mit der die Lenk-Welle (21) gekoppelt ist,
ein Halter-Element (32), das über der Klammer (31) positioniert ist, das Halter-Element (32) hält die Lenk-Stange (23) in einer höheren Position als die obere Klammer (31), und
ein Befestigungs-Element (47, 48), welches das Halter-Element (32) an der oberen Klammer (31) befestigt,
die obere Klammer (31) beinhaltet weiter
einen linken Kopplungs-Abschnitt (42), der mit einem oberen Abschnitt des linken Rohr-Elements (25) zu koppeln ist, und
einen rechten Kopplungs-Abschnitt (43), der mit einem oberen Abschnitt des rechten Rohr-Elements (26) zu koppeln ist,
die Lenk-Stange (23) beinhaltet
einen Halte-Abschnitt (231), der durch das Halter-Element (32) gehalten ist,
ein äußeres Ende (232, 233) in der Fahrzeug-Breiten-Richtung, und
einen erstreckenden Abschnitt (234, 235), der sich von dem Halte-Abschnitt (231) zu dem äußeren Ende (232, 233) in der Fahrzeug-Breiten-Richtung nach außen erstreckt,
die obere Klammer (31) beinhaltet
einen Lenk-Wellen-Kopplungs-Abschnitt (41), mit dem das obere Ende der Lenk-Welle (21) gekoppelt ist, und
einen Halter-Kopplungs-Abschnitt (45, 46), durch den das Befestigungs-Element (47, 48) nach oben und unten hindurchtritt, der Halter-Kopplungs-Abschnitt (45, 46) ist mit einem unteren Abschnitt des Halter-Elements (32) gekoppelt;
eine Oben-und-Unten-Richtungs-Abmessung (L2) von einem hinteren Ende (45a, 46a) des Halter-Kopplungs-Abschnitts (45, 46) zu einem untersten Teil des Halte-Abschnitts (231) ist größer als eine Oben-und-Unten-Richtungs-Abmessung (L0) von einem untersten Teil des Befestigungs-Elements (47, 48) zu einem höchsten Teil von dem Lenk-Wellen-Kopplungs-Abschnitt (41), **dadurch gekennzeichnet, dass** der Lenk-Wellen-Kopplungs-Abschnitt (41) niedriger als der Halter-Kopplungs-Abschnitt (45, 46) und das Befestigungs-Element (47, 48) angeordnet ist,
eine Oben-und-Unten-Richtungs-Abmessung (L3) von dem untersten Teil von dem Halte-Abschnitt (231) zu einem höchsten Teil von dem äußeren Ende (232, 233) der Lenk-Stange (23) kleiner als eine Oben-und-Unten-Richtungs-Abmessung (L1) von dem untersten Teil von dem Halte-Abschnitt (231) zu dem höchsten Teil von dem Lenk-Wellen-Kopplungs-Abschnitt (41) ist, und
ein Boden von dem Lenk-Wellen-Kopplungs-Abschnitt (41) niedriger als ein Boden von dem linken Kopplungs-Abschnitt (42) und einem Boden von dem rechten Kopplungs-Abschnitt (43) angeordnet ist.

2. Ein Spreiz-Sitz-Fahrzeug (1) gemäß Anspruch 1, **dadurch gekennzeichnet, dass** ein vorderes Ende von dem Lenk-Wellen-Kopplungs-Abschnitt (41) vor dem hinteren Ende (45a, 46a) des Halter-Kopplungs-Abschnitts (45, 46) angeordnet ist.

3. Ein Spreiz-Sitz-Fahrzeug (1) gemäß Anspruch 1 oder 2, **gekennzeichnet durch:**
einen Scheinwerfer (7), der einen Lichtscheiben-Abschnitt (71, 72) beinhaltet, der Scheinwerfer (7) ist vor dem Kopf-Rohr (11) positioniert, wobei
ein unteres Ende von einem oberen End-Abschnitt (11a) von dem Kopf-Rohr (11) niedriger als ein oberes Ende von dem Lichtscheiben-Abschnitt (41, 42) angeordnet ist.

4. Ein Spreiz-Sitz-Fahrzeug (1) gemäß zu irgendeinem der Ansprüche 1 bis 3, **dadurch gekennzeichnet, dass** das obere Ende (3a) von dem Kraftstoff-Tank (3) höher als die obere Klammer (31) angeordnet ist.

5. Ein Spreiz-Sitz-Fahrzeug (1) gemäß zu irgendeinem der Ansprüche 1 bis 4, **dadurch gekennzeichnet, dass** ein oberes Ende von dem Halter-Element (32) höher als das obere Ende (3a) von dem Kraftstoff-Tank (3) angeordnet ist.

6. Ein Spreiz-Sitz-Fahrzeug (1) gemäß zu irgendeinem der Ansprüche 1 bis 5, **dadurch gekennzeichnet, dass** der Haupt-Rahmen (15) rechte und linke Haupt-Rahmen (15, 16) beinhaltet, die als ein rechtes und linkes Paar hergestellt sind, und
der Kraftstoff-Tank (3) überlappt jeden von dem rechten und linken Haupt-Rahmen (15, 16) in einer Fahrzeug-Draufsicht.

7. Ein Spreiz-Sitz-Fahrzeug (1) gemäß zu irgendeinem der Ansprüche 1 bis 6, **dadurch gekennzeichnet, dass** der Kraftstoff-Tank (3) einen Maximal-Breiten-Abschnitt in einem vorderen Teil desselben beinhaltet.

8. Ein Spreiz-Sitz-Fahrzeug (1) gemäß zu irgendeinem der Ansprüche 1 bis 7, **dadurch gekennzeichnet, dass** eine Rück-und-Vorwärts-Richtungs-Abmessung (A1) von dem Kopf-Rohr (11) kleiner ist als eine Oben-und-Unten-Richtungs-Abmessung (A2) von dem Kopf-Rohr (11).

9. Ein Spreiz-Sitz-Fahrzeug (1) gemäß zu irgendeinem der Ansprüche 1 bis 8, **dadurch gekennzeichnet, dass** die obere Klammer (31) weiterhin einen mittleren Klammer-Abschnitt (44) beinhaltet, der zwischen dem rechten Kopplungs-Abschnitt (43) und dem linken Kopplungs-Abschnitt (42) in der Fahrzeug-Breiten-Richtung angeordnet ist,
der Halter-Kopplungs-Abschnitt (45, 46) ist an dem mittleren Klammer-Abschnitt (44) vorgesehen,
das Halter-Element (32) beinhaltet
einen oberen Halter-Abschnitt (34), der über der Lenk-Stange (23) positioniert ist, und
einen unteren Halter-Abschnitt (35), der unter der Lenk-Stange (22) positioniert ist, und
eine Abmessung (B1) von dem unteren Halter-Abschnitt (35) in der Axial-Richtung der Lenk-Welle (21) ist größer als eine Abmessung (B2) von dem mittleren Klammer-Abschnitt (44) in der Axial-Richtung der Lenk-Welle (21).

10. Ein Spreiz-Sitz-Fahrzeug (1) gemäß zu irgendeinem der Ansprüche 1 bis 9, **dadurch gekennzeichnet, dass** ein unteres Ende von dem Halter-Element (32) höher als der linke Kopplungs-Abschnitt (42) angeordnet ist.

11. Ein Spreiz-Sitz-Fahrzeug (1) gemäß zu irgendeinem der Ansprüche 1 bis 10, **gekennzeichnet durch:**
ein Element, das zwischen dem Kraftstoff-Tank (3) und der oberen Klammer (31) in einer Fahrzeug-Rück-und-Vorwärts-Richtung positioniert ist.

12. Ein Spreiz-Sitz-Fahrzeug (1) gemäß zu Anspruch 11, **dadurch gekennzeichnet, dass** das Element, das zwischen dem Kraftstoff-Tank (3) und der oberen Klammer (31) positioniert ist, ein Haupt-Schalter (55) ist, und
der Haupt-Schalter (55) hat eine Mitten-Achse (Q), die sich schräg von vorne nach hinten und von oben nach unten erstreckt.

## Revendications

1. Véhicule de type à enfourcher (1) comportant :
un cadre (2) ;
un siège (4) supporté par le cadre (2) ;
une roue avant (8) ;
un dispositif de direction (6) disposé en avant du siège (4), le dispositif de direction (6) étant supporté en rotation par le cadre (2) ; et
un réservoir de carburant (3) disposé derrière le dispositif de direction (6) et en avant du siège (4), où
le cadre (2) comprend
un tube frontal (11) disposé au centre du véhicule à enfourcher (1) dans une direction de la largeur du véhicule, le tube frontal (11) s'étendant obliquement vers le bas et vers l'avant, et
un cadre principal (15) s'étendant vers l'arrière et vers le bas à partir du tube frontal (11), le cadre principal (15) supportant le réservoir de carburant (3), le cadre principal (15) étant situé plus bas qu'une extrémité supérieure (3) du réservoir de carburant (3) dans une vue latérale du véhicule,
le dispositif de direction (6) comprend
une colonne de direction (21) insérée dans le tube frontal (11),
un élément de raccord (22) raccordé à une partie supérieure de la colonne de direction (21), et
une barre de direction (23) maintenue par l'élément de raccord (22),
des éléments tubulaires droit et gauche (25, 26) par lesquels la roue avant (8) est supportée en rotation,
l'élément de raccord (22) comprend
un té de fourche supérieur (31) auquel est raccordée la colonne de direction (21),
un élément de maintien (32) disposé au-dessus du té de fourche supérieur (31), l'élément de maintien (32) maintenant la barre de direction (23) en une position plus élevée que le té de fourche supérieur (31), et
un élément de fixation (47, 48) fixant l'élément de maintien (32) au té de fourche supérieur (31),
le té de fourche supérieur (31) comprend en outre
un partie de raccord gauche (42) destinée à être raccordée avec une partie supérieure de l'élément tubulaire gauche (25), et
un partie de raccord droite (43) destinée à être raccordée avec une partie supérieure de l'élément tubulaire droit (26),
la barre de direction (23) comprend
une partie maintenue (231) maintenue par l'élément de maintien (32),
une extrémité extérieure (232, 233) dans la direction de la largeur du véhicule, et
une partie étendue (234, 235) s'étendant vers l'extérieur à partir de la partie maintenue (231) vers l'extrémité extérieure (232, 233) dans la direction de la largeur du véhicule, le té de fourche supérieur (31) comprend
une partie de raccord de colonne de direction (41) à laquelle l'extrémité supérieure de la colonne de direction (21) est raccordée, et
une partie de raccord d'élément de maintien (45, 46) dans laquelle l'élément de fixation (47, 48) pénètre de haut en bas, la partie de raccord d'élément de maintien (45, 46) étant raccordée à une partie inférieure de l'élément de maintien (32),
une dimension de haut en bas (L2) allant d'une extrémité arrière (45a, 46a) de la partie de raccord d'élément de maintien (45, 46) à la partie la plus basse de la partie maintenue (231) est plus grande qu'une dimension de haut en bas (L0) allant de la partie la plus basse de l'élément de fixation (47, 48) à la partie la plus haute de la partie de raccord de colonne de direction (41), **caractérisé en ce que**
la partie de raccord de colonne de direction (41) est située plus bas que la partie de raccord d'élément de maintien (45, 46) et l'élément de fixation (47, 48),
une dimension de haut en bas (L3) allant de la partie la plus basse de la partie maintenue (231) à la partie la plus haute de l'extrémité extérieure (232, 233) de la barre de direction (23) est plus petite qu'une direction de haut en bas (L1) allant de la partie la plus basse de la partie maintenue (231) à la partie la plus haute de la partie de raccord de colonne de direction (41), et
le bas de la partie de raccord de colonne de direction (41) est situé plus bas que le bas de la partie de raccord gauche (42) et que le bas de la partie de raccord droite (43).

2. Véhicule de type à enfourcher (1) selon la revendication 1, **caractérisé en ce qu'**une extrémité avant de la partie de raccord de colonne de direction (41) est située en avant de l'extrémité arrière (45a, 46a) de la partie de raccord d'élément de maintien (45, 46).

3. Véhicule de type à enfourcher (1) selon la revendication 1 ou 2, **caractérisé par** :
un phare (7) comprenant une partie formant une lentille (71, 72), le phare (7) étant disposé en avant du tube frontal (11), où
une extrémité inférieure d'une partie d'extrémité supérieure (11a) du tube frontal (11) est située plus bas qu'une extrémité supérieure de la partie formant une lentille (71, 72).

4. Véhicule de type à enfourcher (1) selon l'une quelconque des revendications 1 à 3, **caractérisé en ce que** l'extrémité supérieure (3a) du réservoir de carburant (3) est située plus haut que le té de fourche supérieur (31).

5. Véhicule de type à enfourcher (1) selon l'une quelconque des revendications 1 à 4, **caractérisé en ce qu'**une extrémité supérieure de l'élément de maintien (32) est située plus haut que l'extrémité supérieure (3a) du réservoir de carburant (3).

6. Véhicule de type à enfourcher (1) selon l'une quelconque des revendications 1 à 5, **caractérisé en ce que** le cadre principal (15) comprend un cadre principal droit et un cadre principal gauche (15, 16) produits sous la forme d'une paire droite/gauche,
et
le réservoir de carburant (3) se superpose aux cadres principaux droit et gauche (15, 16) dans une vue en plan du véhicule.

7. Véhicule de type à enfourcher (1) selon l'une quelconque des revendications 1 à 6, **caractérisé en ce que** le réservoir de carburant (3) comprend une partie de largeur maximale dans sa partie avant.

8. Véhicule de type à enfourcher (1) selon l'une quelconque des revendications 1 à 7, **caractérisé en ce qu'**une dimension avant/arrière (A1) du tube frontal (11) est plus petite qu'une dimension de haut en bas (A2) du tube frontal (11).

9. Véhicule de type à enfourcher (1) selon l'une quelconque des revendications 1 à 8, **caractérisé en ce que** le té de fourche supérieur (31) comprend en outre une partie de té centrale (44) située entre la partie de raccord droite (43) et la partie de raccord gauche (42) dans la direction de la largeur du véhicule, la partie de raccord d'élément de maintien (45, 46) est agencée sur la partie de té centrale (44), l'élément de maintien (32) comprend
une partie d'élément de maintien supérieure (34) disposée au-dessus de la barre de direction (23), et
une partie d'élément de maintien inférieure (35) disposée sous la barre de direction (23), et
une dimension (B1) de la partie d'élément de maintien inférieure (35) dans une direction axiale de la colonne de direction (21) est plus grande qu'une dimension (B2) de la partie de té centrale (44) dans la direction axiale de la colonne de direction (21).

10. Véhicule de type à enfourcher (1) selon l'une quelconque des revendications 1 à 9, **caractérisé en ce qu'**une extrémité inférieure de l'élément de maintien (32) est située plus haut que la partie de raccord gauche (42).

11. Véhicule de type à enfourcher (1) selon l'une quelconque des revendications 1 à 10, **caractérisé par**
un élément disposé entre le réservoir de carburant (3) et le té de fourche supérieur (31) dans une direction avant/arrière du véhicule.

12. Véhicule de type à enfourcher (1) selon la revendication 11, **caractérisé en ce que** l'élément disposé entre le réservoir de carburant (3) et le té de fourche supérieur (31) est un interrupteur principal (55), et
l'interrupteur principal (55) présente un axe central (Q) s'étendant obliquement d'avant en arrière et de bas en haut.
